# FASCICULE DE BREVET EUROPEEN

(11) **EP 1 910 010 B1**
(45) Date de publication et mention de la délivrance du brevet: **17.03.2010**
(21) Numéro de dépôt: 06764796.6
(22) Date de dépôt: 15.06.2006
(51) Int. Cl.: B23K 9/29, B23K 9/16, B23K 9/32, B23K 9/02

(54) **TORCHE DE SOUDAGE COMPRENANT UNE GRILLE AJOUREE CONVEXE POUR ELARGIR LE JET DE GAZ**
EIN KONVEXES DURCHBROCHENES GITTER ZUR VERGRÖSSERUNG DES GASSTRAHLS ENTHALTENDER SCHWEISSBRENNER
WELDING TORCH COMPRISING A CONVEX OPEN-WORK GRID FOR ENLARGING THE GAS JET

(30) Priorité: 15.06.2005 FR 0506082
(43) Date de publication de la demande: 16.04.2008
(73) Titulaire: Areva NP, 92400 Courbevoie (FR)
(72) Inventeur: BON, Bernard, F-71350 Ciel (FR); PEIGNEY, Alain, F-71240 St Loup De Varennes (FR)
(74) Mandataire: Domenego, Bertrand
(86) Numéro de dépôt international: PCT/FR2006/001363
(87) Numéro de publication internationale: WO 2006/134276

(56) Documents cités:
- US-A- 4 284 870
- US-A- 5 373 139
- PATENT ABSTRACTS OF JAPAN vol. 006, no. 126 (M-142), 10 juillet 1982 (1982-07-10) -& JP 57 052575 A (KAWASAKI HEAVY IND LTD), 29 mars 1982 (1982-03-29)
- PATENT ABSTRACTS OF JAPAN vol. 1999, no. 03, 31 mars 1999 (1999-03-31) -& JP 10 328840 A (HITACHI CONSTR MACH CO LTD), 15 décembre 1998 (1998-12-15)
- PATENT ABSTRACTS OF JAPAN vol. 007, no. 237 (M-250), 21 octobre 1983 (1983-10-21) -& JP 58 125376 A (MITSUBISHI HEAVY IND LTD), 26 juillet 1983 (1983-07-26)
- PATENT ABSTRACTS OF JAPAN vol. 004, no. 123 (M-029), 30 août 1980 (1980-08-30) -& JP 55 081086 A (KAWASAKI HEAVY IND LTD), 18 juin 1980 (1980-06-18)
- PATENT ABSTRACTS OF JAPAN vol. 010, no. 126 (M-477), 10 mai 1986 (1986-05-10) -& JP 60 255281 A (HITACHI LTD), 16 décembre 1985 (1985-12-16)

## Description

L'invention concerne en général une torche de soudage conformément au préambule de la revendication 1 (voir, par exemple, JP 55/081086) notamment de type TIG ou MIG.

Plus précisément, l'invention concerne une torche de soudage du type comprenant un corps de torche allongé suivant une direction longitudinale et présentant une extrémité de travail, une électrode en saillie longitudinalement par rapport à l'extrémité de travail un canal de circulation d'un gaz de protection ménagé dans le corps et se terminant à l'extrémité de travail par au moins une ouverture d'éjection du gaz sous forme d'un jet vers l'électrode.

Des torches de ce type sont utilisées pour souder bord à bord des plaques de forte épaisseur, qui définissent entre elles une rainure étroite et profonde. Une telle soudure est réalisée en plusieurs passes. Les premières passes, qui permettent de remplir le fond de la rainure, sont réalisées avec une torche de faible diamètre. Les dernières passes, qui permettent de remplir la partie superficielle de la rainure, sont réalisées avec une torche de plus grand diamètre, pour que le jet de gaz de protection couvre toute la largeur du bain de soudure.

La mise en oeuvre de deux torches de soudure différentes pour la même opération de soudure est lourde, et ralentit les opérations. Le temps mort nécessaire pour monter et démonter les torches et pour régler les moyens de fourniture de gaz est important.

JP-57/052575 et JP-55/081086 décrivent deux torches de soudage adaptées à des rainures étroites. Ces torches comportent des buses latérales de soufflage d'un gaz de protection de part et d'autre du corps de torche.

Dans ce contexte, l'invention vise à proposer une torche de soudage avec laquelle il soit possible de réaliser toutes les passes en cas de soudage bord à bord de deux plaques de forte épaisseur.

Dans ce but, l'invention propose une torche de soudage du type précité telle que définie dans la revendication 1.

La torche peut également présenter une ou plusieurs des caractéristiques ci-dessous, considérées individuellement ou selon toutes les combinaisons techniquement possibles :
- la grille convexe comprend une partie de forme hémisphérique ;
- la grille convexe est un treillis de fils métallique définissant entre eux des espaces de passage du gaz,
- la torche comprend une jupe annulaire entourant la ou les ouvertures et s'étendant à partir de l'extrémité de travail autour de la partie saillante de l'électrode, la jupe présentant une extrémité ouverte opposée à l'extrémité de travail couverte par la grille convexe ;
- la grille convexe est réalisée en acier inoxydable ;
- le flux de gaz à travers la grille convexe est laminaire ;
- la torche comprend au moins une grille brise jet sensiblement plane, interposée dans le flux de gaz entre la ou les ouvertures et la grille convexe ;
- les moyens d'élargissement comprennent plusieurs grilles convexes superposées les unes aux autres ;
- le corps de torche présente une section de dimension maximale inférieure à 30 millimètres ;
- la torche est adaptée aux procédés de soudage TIG (tungstène gaz inerte) ou MIG (métal gaz inerte).

D'autres caractéristiques et avantages de l'invention ressortiront de la description qui en est donnée ci-dessous, à titre indicatif et nullement limitatif, en référence aux figures annexées, parmi lesquelles :
- la figure 1 est une vue en coupe longitudinale d'une torche de soudage selon l'invention ; et
- la figure 2 est une vue agrandie de l'extrémité de travail de la torche de la figure 1, le jet de gaz obtenu avec une telle torche étant représenté en traits interrompus, et le jet de gaz obtenu avec une torche de l'état de la technique étant représenté en traits mixtes, pour comparaison.

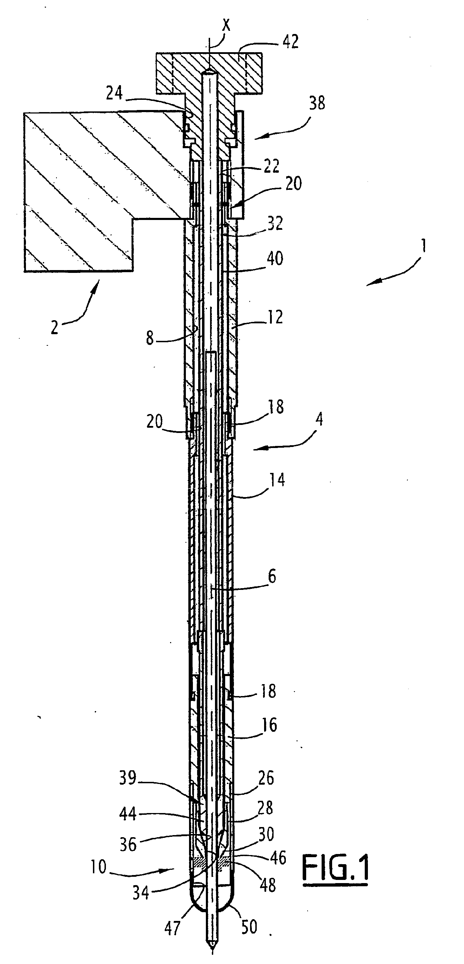

La torche de soudage 1 représentée sur la figure 1 comprend un bloc de support 2, un corps de torche 4 allongé suivant une direction longitudinale et rigidement fixée sur le bloc 2, une électrode 6 longitudinale disposée dans le corps 4, un canal de circulation 8 d'un gaz de protection ménagé dans le corps 4, une contre-électrode (non représentée), et une source de tension susceptible de maintenir une différence de tension entre l'électrode et la contre-électrode.

L'électrode 6 fait saillie longitudinalement par rapport à une extrémité de travail 10 du corps 4 opposée au bloc 2.

Le corps de torche 4 comprend trois tronçons cylindriques creux 12, 14 et 16, coaxiaux, d'axe longitudinal X, disposés dans le prolongement les uns des autres. Les tronçons 12, 14 et 16 sont vissés les uns aux autres par leurs extrémités respectives. Des joints d'étanchéité 18 sont interposés entre eux.

Le bloc 2 est traversé par un orifice 20 comprenant vers le bas de la figure 1 une portion filetée 22 de diamètre relativement moins grand, et une portion non filetée 24 de diamètre relativement plus grand prolongeant la portion filetée 22 vers le haut de la figure 1.

Le tronçon supérieur 12 est vissé par une extrémité filetée supérieure dans la portion filetée 22 de l'orifice 20.

Le tronçon de travail 16 est le plus éloigné du bloc 2, le tronçon intermédiaire 14 reliant les tronçons 12 et 16.

Le tronçon 16 comprend, à partir du tronçon 14, une partie principale de diamètre extérieur nominal, un premier épaulement 26 de diamètre réduit par rapport à la partie principale, puis un second épaulement 28 de diamètre réduit par rapport au premier épaulement 26, et enfin une extrémité chanfreinée 30. On notera que le tronçon intermédiaire 14 est de diamètre extérieur nominal et que le tronçon de fixation 12 présente un diamètre extérieur supérieur au diamètre nominal. Le diamètre nominal est typiquement compris entre 8 mm et 30 mm.

Le corps de torche 4 est réalisé dans un matériau réfractaire.

Le corps 4 comprend un canal interne 32, s'étendant sur toute sa longueur longitudinale, ouvert à ses deux extrémités, c'est-à-dire au niveau du bloc 2 et à l'extrémité de travail 10.

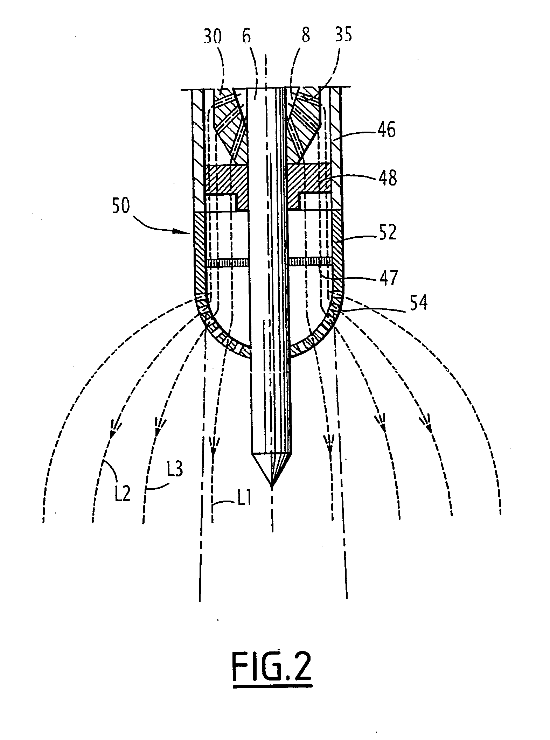

Le canal interne 32 débouche à l'extérieur au niveau de l'extrémité de travail 10 par une ouverture centrale 34 ronde centrée sur l'axe X, et par plusieurs ouvertures 35 d'éjection du gaz de protection percés dans l'extrémité chanfreinée 30 (figure 2), disposées autour de l'ouverture centrale 34.

La section de passage du canal interne 32 se rétrécit progressivement le long de l'épaulement 28 et de l'extrémité chanfreinée 30, en allant vers l'ouverture 34. La paroi interne délimitant le canal 32 présente, de ce fait, une portion 36 convergente vers l'ouverture 34 s'étendant le long de l'épaulement 28 et de extrémité chanfreinée 30.

L'électrode 6 présente une forme cylindrique allongée longitudinalement et est disposée dans le canal interne 32 du corps 4 selon l'axe X. L'électrode 6 s'étend le long d'une partie du tronçon 12, le long des tronçons 14 et 16, et est engagée dans l'ouverture centrale 34. L'électrode 6 présente par exemple un diamètre extérieur compris entre 1,6 mm et 4 mm, et fait saillie par rapport à l'extrémité de travail 10 du corps 4 sur environ 50 mm.

La torche 1 comprend en outre des moyens de blocage 38 de l'électrode 6 par rapport au corps 4. Ces moyens 38 comprennent une pince tubulaire 39 interposée entre l'électrode 6 et le tronçon de travail 16 du corps 4, un tube d'appui 40 accolé longitudinalement à la pince 39 et une vis 42. La pince 39 présente une extrémité inférieure 44 divisée en quatre secteurs égaux par des fentes longitudinales. Cette extrémité inférieure 44 est en appui longitudinalement sur la portion convergente 36 de la paroi interne du canal 4.

Le tube 40 est en appui par une extrémité sur la pince 39. Il s'étend le long des tronçons 14 et 12 du corps 4, et est engagé dans la portion 22 de l'orifice 20.

La vis 42 est engagée dans la portion non filetée 24 de l'orifice 20 et vissée par une partie terminale dans la portion filetée 22. Elle appuie longitudinalement sur le tube 40. La vis 42 sollicite le tube 40 en déplacement longitudinalement vers l'extrémité de travail 10, le tube 40 sollicitant à son tour la pince 38 vers cette même extrémité de travail 10. Les segments de l'extrémité fendue 44, qui portent contre la partie convergente 36 de la paroi interne, sont, de ce fait, sollicités radialement vers l'électrode 6, et enserrent celle-ci. La contrainte exercée par l'extrémité fendue 44 sur l'électrode 6 est fonction de la position longitudinale de la vis 42 dans l'orifice 20.

La torche 1 comprend également une jupe 46 cylindrique de canalisation du flux de gaz, d'axe X, s'étendant autour de l'extrémité de travail 10. La jupe 46 est rigidement fixée sur l'épaulement 26. Elle s'étend longitudinalement, depuis cet épaulement 26 jusqu'à un point sensiblement équidistant entre l'ouverture centrale 34 et l'extrémité libre de l'électrode 6. La jupe 46 entoure l'extrémité chanfreinée 30 du tube 4 et l'électrode 6. Elle est ouverte à son extrémité 47 opposée à l'épaulement 26.

Le canal de circulation 8 du gaz de protection correspond à l'espace annulaire ménagé entre, d'une part, les tronçons 12, 14 et 16 du corps de torche 4, et, d'autre part, le tube 40 et la pince 38. Le canal 8 se termine à l'extrémité de travail 10 par les ouvertures 35 d'éjection du gaz. Ces ouvertures 35 mettent en communication le canal 8 avec l'espace situé entre la jupe 46 et le tronçon 16.

La torche 1 comprend des moyens pour alimenter le canal 8 en gaz de protection, par exemple à partir de bouteilles (non représentées), à travers le bloc 2.

La torche 1 comprend encore une pluralité de grilles brise-jet 48, planes, s'étendant perpendiculairement à l'axe X. Les grilles brise-jet 48 sont empilées axialement les unes sur les autres, et présentent chacune une forme circulaire de diamètre correspondant au diamètre intérieur de la jupe 46. Les grilles 48 sont rigidement fixées sur la jupe 46, et occupent toute la section droite de la jupe 46. Elles sont traversées en leurs centres par l'électrode 6. Elles sont disposées contre l'extrémité chanfreinée 30 du tronçon 16.

Chaque grille 48 est un treillis ajouré de fils métalliques réalisé avec des fils d'acier inoxydable 304L de diamètre 0,16 mm. Les fils sont disposés de façon à définir entre eux des espaces libres carrés, d'environ 0,5 mm de côté.

La torche 1 comprend conformément à l'invention une grille 50 convexe, rigidement fixée autour de l'extrémité ouverte 47 de la jupe 46. La grille 50 est convexe dans une direction opposée aux ouvertures 35 d'éjection du gaz. Elle recouvre entièrement l'extrémité ouverte 47 de la jupe 46.

La grille convexe 50 comprend une partie annulaire 52 fixée à l'extérieur de la jupe 46, prolongée par une partie hémisphérique 54 couvrant l'extrémité ouverte 47. La partie hémisphérique 54 couvre de ce fait les ouvertures d'éjection 35, au sens où le gaz éjecté par ces ouvertures 35 s'écoule nécessairement à travers la partie 54. En d'autres termes, la partie 54 est interposée dans le flux de gaz s'écoulant depuis les ouvertures d'éjection 35 vers la partie saillante de l'électrode. L'électrode 6 traverse la partie 54 au centre de celle-ci.

La grille convexe 50 est réalisée, comme les grilles brise-jet 48, sous la forme d'un treillis ajouré de fils métalliques. Ici encore, les fils sont des fils d'acier inoxydable 304L, par exemple de diamètre 0,16 mm, disposés de façon à définir entre eux des espaces libres carrés de 0,5 mm de côté.

Le rayon de courbure de la partie hémisphérique 54 de la grille 50 est par exemple d'environ 5 mm.

La longueur de la torche, prise entre le bloc 2 et l'extrémité libre de l'électrode 6 est par exemple comprise entre 170 mm et 500 mm.

Le gaz de protection est de l'argon, ou de l'hélium, ou un mélange d'argon et d'hélium.

Le gaz de protection circule depuis le bloc 2 jusqu'à l'extrémité de travail 10 le long du canal 8, est éjecté hors du corps 4 sous forme d'un jet par les ouvertures 35, dans l'espace intérieur de la jupe 46, vers la partie en saillie de l'électrode 6. Le jet de gaz, canalisé par la jupe 46, traverse ensuite les grilles brise-jet 48 en passant par les espaces libres. Le jet de gaz est ensuite canalisé par la jupe 46 jusqu'à la grille convexe 50, et traverse la partie 54 par les espaces libres de celle-ci.

Le gaz sortant du corps 4 s'écoule de façon sensiblement laminaire, longitudinalement, jusqu'à la grille 50. Comme le montre la figure 2, les veines de fluide L1 situées au centre du flux, c'est-à-dire le long de l'électrode 6, traversent la grille convexe 50 par des espaces proches de l'électrode 6, orientés sensiblement longitudinalement ou faiblement inclinés par rapport à l'axe X. Ces veines de fluide ne sont pratiquement pas déviées en passant à travers la grille 50.

Les veines de fluide L2 situées à la périphérie du flux, c'est-à-dire s'écoulant le long de la jupe 46, traversent la grille 50 par des espaces situés à la périphérie de cette grille. Ces espaces sont orientées suivant des directions fortement inclinées par rapport à l'axe X, de telle sorte que les veines de fluide L2 qui passent à travers ces espaces sont fortement déviées vers l'extérieur du flux en traversant la grille 5C.

Les veines de fluide L3 situées dans une zone intermédiaire entre l'électrode 6 et la jupe 46 passent par des espaces de la grille 50 s'étendant suivant des directions moyennement inclinées par rapport à l'axe X, et sont donc moyennement déviées vers l'extérieur du flux.

Le flux de gaz est donc considérablement plus large en aval de la grille convexe 50 qu'en amont de cette même grille.

A titre de comparaison, on a représenté sur la figure 2 le flux de gaz obtenu avec la torche de l'invention, en traits interrompus, et le flux de gaz obtenu avec une torche identique, mais dépourvue de grille convexe 50. Ce flux est représenté en traits mixtes.

En l'absence de grille convexe 50, le flux de gaz ne diverge pratiquement pas à partir de l'extrémité ouverte 47 de la jupe 46. Au contraire, quand la torche comporte une grille convexe 50, le flux de gaz diverge nettement à partir de l'extrémité 47 de la jupe 46. La section droite du flux de gaz, prise perpendiculairement à l'axe X, est sensiblement deux fois plus grande avec une grille convexe 50 que sans grille 50, au niveau de l'extrémité libre de l'électrode 6.

La torche décrite ci-dessus présente de multiples avantages.

Elle comporte une grille convexe en fils métalliques, permettant d'élargir le flux de gaz de protection. Ce résultat est obtenu de manière économique.

L'utilisation d'une torche du type décrit ci-dessus, dont le corps présente un faible diamètre extérieur, est particulièrement adapté pour réaliser une soudure bord à bord de deux pièces séparées par une rainure profonde et étroite, par exemple de 250 mm de profondeur et de 20 mm de largeur. La torche peut être utilisée pour les premières passes de soudure, au fond de la rainure. Le bain de soudure est étroit lors des premières passes, de largeur identique à celle de la rainure. La même torche peut également être utilisée pour les dernières passes, à moins de 10 mm de profondeur de la surface des pièces. Le bain de soudure, lors des dernières passes, est beaucoup plus large qu'en fond de rainure. Du fait que le flux de gaz de protection de la torche est élargi, il couvre l'ensemble du bain de soudure, que ce soit en profondeur dans la rainure, ou au niveau de la surface extérieure des pièces à souder.

L'utilisation d'une telle torche est particulièrement adaptée lors d'une opération de remplacement d'un générateur de vapeur de réacteur nucléaire. Au cours d'une telle opération, on découpe les tuyauteries du circuit primaire en amont et en aval du générateur de vapeur à remplacer. Puis on évacue le générateur de vapeur, en laissant en attente les tronçons amont et aval restants. On remet ensuite en place un nouveau générateur de vapeur, pourvu de départs de tuyauteries primaires amont et aval, et on soude ces départs de tuyauterie sur les tronçons restants en attente. Les tronçons restants en attente et les départs de tuyauterie sont des pièces de forte épaisseur, plusieurs dizaines de millimètre chacune, à souder bord à bord. Ils sont séparés, au moment du soudage, par un interstice d'une dizaine de millimètre de largeur. Utilisée dans ce cas, une torche du type décrit ci-dessus est particulièrement avantageuse, du fait qu'une même torche peut être utilisée pour toutes les passes de soudure. L'intervention est plus rapide que dans le cas où il est nécessaire d'utiliser une première torche pour réaliser les passes en fond de rainure, et une seconde torche pour réaliser les dernières passes à proximité de la surface extérieure des tuyauteries. II n'y a pas de temps mort nécessaire pour échanger la torche et pour effectuer les réglages (débit de gaz, alimentation électrique) adaptés au fonctionnement de la seconde torche. Du fait que ces opérations de soudage sont réalisées dans des zones du réacteur nucléaire où le débit de dose n'est pas négligeable, raccourcir la durée d'intervention est particulièrement important, de façon à diminuer l'exposition des intervenants aux rayonnements ionisants.

La torche décrite ci-dessus est également particulièrement avantageuse dans le cas de soudures réalisées en plafond, c'est-à-dire dans le cas où la torche est située sous les pièces à souder. Dans ce cas, la grille convexe 50 sert de protection à la grille brise-jet 48. Des gouttelettes de métal fondu tombant du bain de soudure sont arrêtées par la grille convexe 50, avant d'atteindre la grille brise-jet 48.

La torche décrite ci-dessus peut présenter de multiples variantes.

Elle est adaptée pour le procédé de soudage TIG (Tungstène Gaz Inerte) ou MIG (Métal Gaz Inerte).

Elle peut être utilisée en cas de soudage avec métal d'apport ou sans métal d'apport.

Elle peut être utilisée manuellement par un opérateur, ou dans une machine automatique de soudage.

Le corps 4 peut être refroidi par circulation d'eau, ou ne pas être refroidi, selon les cas.

La grille convexe 50 peut présenter de multiples formes. Elle peut être hémisphérique, comme décrit ci-dessus. Elle peut également présenter une section elliptique dans un plan contenant l'axe X. Elle peut de même présenter une forme irrégulière, avec une partie plane perpendiculaire à !'axe X entourant l'électrode 6, et une partie bombée s'étendant entre la partie plane et l'extrémité ouverte 47 de la jupe 46.

La torche peut ne pas comprendre de jupe 46. Dans ce cas, la grille convexe 50 est fixée directement sur l'épaulement 28 ou sur l'épaulement 26.

La torche peut être employée pour des soudages bout à bout, des soudages bord à bord, ou des soudages d'angle.

Elle est adaptée pour souder entre elles deux pièces de forte épaisseur, mais peut également être utilisée pour souder entre elles deux pièces de faible épaisseur.

Elle est adaptée pour la réalisation de soudure avec pleine pénétration ou pas.

On a décrit ci-dessus un exemple de réalisation dans lequel le corps de torche présentait un diamètre extérieur compris entre 8 mm et 30 mm. Toutefois, le corps de torche peut tout aussi bien présenter un diamètre supérieur à 30 mm.

La torche peut également comprendre plusieurs grilles convexes 50 superposées axialement les unes sur les autres. Ces grilles 50 sont normalement du même type (réalisés avec les mêmes fils définissant entre eux des espaces libres de mêmes tailles), mais peuvent également être de types différents. Elles sont plaquées les unes sur les autres. L'utilisation de plusieurs grilles convexes 50 superposées permet d'obtenir un jet de gaz dont les veines de fluides sont réparties de façon particulièrement homogène. Le jet obtenu est parfaitement laminaire.

## Revendications

1. Torche de soudage (1) comprenant un corps de torche (4) allongé suivant une direction longitudinale et présentant une extrémité de travail (10), une électrode (6) comprenant une partie en saillie longitudinalement par rapport à l'extrémité de travail (10), un canal (8) de circulation d'un gaz de protection ménagé dans le corps (4) et se terminant à l'extrémité de travail par au moins une ouverture (35) d'éjection du gaz sous forme d'un jet vers la partie en saillie de l'électrode (6), **caractérisée en ce qu'**elle comprend des moyens (50) d'élargissement du jet de gaz comportant une grille (50) ajourée convexe couvrant la ou les ouvertures (35) du canal (8), la grille (50) étant bombée dans une direction opposée à la ou aux ouvertures (35) et étant traversée par l'électrode (6).

2. Torche selon la revendication 1, **caractérisée en ce que** la grille convexe (50) comprend une partie de forme hémisphérique (54).

3. Torche selon la revendication 1 ou 2, **caractérisée en ce que** la grille convexe (50) est un treillis de fils métallique définissant entre eux des espaces de passage du gaz.

4. Torche selon l'une quelconque des revendications 1 à 3, **caractérisée en ce qu'**elle comprend une jupe annulaire (46) entourant la ou les ouvertures (35) et s'étendant à partir de l'extrémité de travail (10) autour de la partie saillante de l'électrode (6), la jupe (46) présentant une extrémité ouverte (47) opposée à l'extrémité de travail (10) couverte par la grille convexe (50).

5. Torche selon l'une quelconque des revendications 1 à 4, **caractérisée en ce que** la grille convexe (50) est réalisée en acier inoxydable.

6. Torche selon l'une quelconque des revendications 1 à 5, **caractérisée en ce que** le flux de gaz à travers la grille convexe (50) est laminaire.

7. Torche selon l'une quelconque des revendications 1 à 6, **caractérisée en ce qu'**elle comprend au moins une grille brise jet (48) sensiblement plane, interposée dans le flux de gaz entre la ou les ouvertures (35) et la grille convexe (50).

8. Torche selon l'une quelconque des revendications 1 à 7, **caractérisée en ce que** les moyens d'élargissement comprennent plusieurs grilles convexes (50) superposées les unes aux autres.

9. Torche selon l'une quelconque des revendications 1 à 8, **caractérisée en ce que** le corps de torche (4) présente une section de dimension maximale inférieure à 30 millimètres.

10. Torche selon l'une quelconque des revendications 1 à 9, **caractérisée en ce qu'**elle est adaptée aux procédés de soudage TIG (tungstène gaz inerte) ou MIG (métal gaz inerte).

11. Torche selon l'une quelconque des revendications 1 à 10, **caractérisée en ce que** l'électrode (6) traverse la grille (50) en son centre.

## Claims

1. Welding torch (1) comprising a torch body (4) that is elongated in a longitudinal direction and has a working end (10), an electrode (6) comprising a section that projects longitudinally in relation to the working end (10), a duct (8) for circulation of a protective gas arranged in the body (4) and terminating at the working end in at least one gas discharge opening (35) in the form of a jet towards the projecting section of the electrode (6), **characterised in that** it comprises means (50) for widening the gas jet having a convex open-worked grid (50) covering the opening or openings (35) of the duct (8), wherein the grid (50) is curved in an opposite direction to the opening or openings (35) and has the electrode (6) passing through it.

2. Torch according to claim 1, **characterised in that** the convex grid (50) comprises a hemispherically shaped section (54).

3. Torch according to claim 1 or 2, **characterised in that** the convex grid (50) is a mesh of metal wires defining spaces between them for the passage of the gas.

4. Torch according to any one of claims 1 to 3, **characterised in that** it comprises an annular apron (46) surrounding the opening or openings (35) and extending from the working end (10) around the projecting section of the electrode (6), wherein the apron (46) has an open end (47) arranged opposite the working end (10) covered by the convex grid (50).

5. Torch according to any one of claims 1 to 4, **characterised in that** the convex grid (50) is made from stainless steel.

6. Torch according to any one of claims 1 to 5, **characterised in that** the gas flux through the convex grid (50) is laminar.

7. Torch according to any one of claims 1 to 6, **characterised in that** it comprises at least one substantially plane anti-splash grid (48) interposed in the gas flux between the opening or openings (35) and the convex grid (50).

8. Torch according to any one of claims 1 to 7, **characterised in that** the widening means comprises several convex grids (50) superposed one above the other.

9. Torch according to any one of claims 1 to 8, **characterised in that** the torch body (4) has a section with a maximum dimension of less than 30 millimetres.

10. Torch according to any one of claims 1 to 9, **characterised in that** it is suitable for TIG (tungsten insert gas) or MIG (metal inert gas) welding processes.

11. Torch according to any one of claims 1 to 10, **characterised in that** the electrode (6) passes through the grid (50) at its centre.

## Patentansprüche

1. Schweißbrenner (1), einen gemäß einer Längsrichtung lang gestreckten-Brennerkörper (4), der ein Bearbeitungsende (10) aufweist, umfassend, wobei eine Elektrode (6) ein in Längsrichtung in Bezug auf das Arbeitsende (10) hervorspringendes Teil einschließt, ein Kanal (8) zur Zirkulation eines Schutzgases in den Körper (4) eingearbeitet ist, der am Bearbeitungsende in mindestens einer Öffnung (35) zum Ausstoßen des Gases in Form eines Strahls in Richtung des hervorspringenden Teils der Elektrode (6) endet, **dadurch gekennzeichnet, dass** er Mittel (50) zur Vergrößerung des Gasstrahls umfasst, die ein konvexes durchbrochenes Gitter (50) aufweisen, das die Öffnung(en) (35) des Kanals (8) bedeckt, wobei das Gitter (50) in eine zu der oder den Öffnung(en) entgegengesetzt liegenden Richtung bombiert ist und von der Elektrode (6) durchquert wird.

2. Brenner nach Anspruch 1, **dadurch gekennzeichnet, dass** das konvexe Gitter (50) einen halbkugelförmigen Bereich (54) umfasst.

3. Brenner nach Anspruch 1 oder 2, **dadurch gekennzeichnet, dass** das konvexe Gitter (50) ein Geflecht aus Metallfäden ist, die zwischen sich einen Raum für den Gasdurchgang definieren.

4. Brenner nach einem beliebigen der Ansprüche 1 bis 3, **dadurch gekennzeichnet, dass** er eine ringförmige Schürze (46) aufweist, die die Öffnung(en) (35) umgibt und sich vom Bearbeitungsende (10) um das hervorspringende Teil der Elektrode (6) herum erstreckt, wobei die Schürze (46) ein offenes Ende (47) aufweist, das entgegengesetzt zum Bearbeitungsende (10) liegt und von dem konvexen Gitter (50) abgedeckt ist.

5. Brenner nach einem beliebigen der Ansprüche 1 bis 4, **dadurch gekennzeichnet, dass** das konvexe Gitter (50) aus nicht oxidierendem Stahl hergestellt ist.

6. Brenner nach einem beliebigen der Ansprüche 1 bis 5, **dadurch gekennzeichnet, dass** der Gasstrom durch das konvexe Gitter (50) hindurch laminar ist.

7. Brenner nach einem beliebigen der Ansprüche 1 bis 6, **dadurch gekennzeichnet, dass** er mindestens ein im Wesentlichen ebenes Strahlregelgitter (48) umfasst, das in den Gasstrom zwischen die Öffnung(en) (35) und das konvexe Gitter (50) eingesetzt ist.

8. Brenner nach einem beliebigen der Ansprüche 1 bis 7, **dadurch gekennzeichnet, dass** die Mittel zur Vergrößerung mehrere konvexe Gitter (50) aufweisen, die übereinander angeordnet sind.

9. Brenner nach einem beliebigen der Ansprüche 1 bis 8, **dadurch gekennzeichnet, dass** der Brennerkörper (4) einen Querschnitt mit einer maximalen Abmessung kleiner als 30 Millimeter aufweist.

10. Brenner nach einem beliebigen der Ansprüche 1 bis 9, **dadurch gekennzeichnet, dass** er an die TIG(Wolfram-Inertgas)- oder MIG(Metall-Inertgas)-Schweißverfahren angepasst ist.

11. Brenner nach einem beliebigen der Ansprüche 1 bis 10, **dadurch gekennzeichnet, dass** die Elektrode (6) das Gitter (50) in seiner Mitte durchquert.
